# EUROPEAN PATENT APPLICATION

(11) **EP 4 574 787 A1**
(43) Date of publication of application: **25.06.2025**
(21) Application number: 23020567.6
(22) Date of filing: 21.12.2023
(51) Int. Cl.: C04B 7/04, C04B 7/24

(54) **METHOD OF PRODUCING CEMENT CLINKER FROM A SOURCE OF CALCIUM SULFATE**

(71) Applicant: Holcim Technology Ltd, 6300 Zug (CH)
(72) Inventor: Dietz, Stefan, CH-5113 Holderbank (CH); Boes, Karl-Heinz, CH-5113 Holderbank (CH); Stoffel, Beat, CH-5113 Holderbank (CH); Seyler, Laurent, CH-5113 Holderbank (CH)
(74) Representative: SONN Patentanwälte GmbH & Co KG

(57) **Abstract**

A method of producing cement clinker from a source of calcium sulfate, comprising:
- blending a source of calcium sulfate with silica, alumina, and iron oxide containing materials in order to obtain a raw material mixture, the calcium sulfate comprising chemically bound water,
- a first step of heating the raw material mixture in the absence of a reducing agent in a first reactor so as to desulfurize the calcium sulfate to obtain
a) a pre-calcined material comprising calcium oxide,
b) steam, and
c) sulfur dioxide

- a second step of calcining the pre-calcined material in a second rector to obtain cement clinker.

## Description

The invention refers to a method of producing cement clinker from a source of calcium sulfate.

The production of Portland clinker is traditionally done by preparing a raw meal that comprises limestone and raw clays, and calcining this raw material in a rotary kiln at a temperature of around 1'450°C. During this calcination step, the calcium carbonate in the limestone decarbonates to form carbon dioxide and calcium oxide. Furthermore, the rotary kiln used for the production of Portland clinker is heated by a burner, which produces heat from burning carbon-containing materials, such as fuels and waste materials, which also produces carbon dioxide. These two processes run simultaneously in a Portland clinker manufacturing plant, and produce high amounts of carbon dioxide.

An alternative method of production of Portland clinker that does not require the use of calcium carbonate materials is based on the Müller Kühne (MK) process, wherein a source of calcium sulfates together with correctives is used as the calcium providing material. In the MK-process calcium sulfate, for example in the form of gypsum, is reduced to calcium sulfite which reacts with calcium sulfate to give sulfur dioxide and calcium oxide, the latter being the main material to obtain cement clinker. The MK-process starts at temperatures of around 800°C and requires a source of carbon, which acts as a reducing agent. The calcium oxide resulting from the MK-process is further processed to obtain cement clinker.

US 2022/0204403 A1 discloses a method of producing cement and co-producing sulfuric acid from phosphogypsum.

EP 728713 B1 discloses a process where calcium sulfate materials are mixed with reactive carbon, and calcined at a first temperature of over 700°C so as to obtain calcium oxide, and the calcium oxide is then calcined at a temperature of over 1200°C in the presence of silica, alumina and iron oxide to obtain clinker. The SO₂ containing flue gas is then treated to be converted to SO₃ to produce sulfuric acid.

DE 19625538 B4 discloses a method of producing Portland cement and sulfuric acid by the MK-process, wherein waste gypsum board and other gypsum rubble are used as a source of calcium sulfate. The waste gypsum boards are pre-reduced to a uniform mill-processable edge length, sorted and freed from foreign materials such as wood, steel and plastic pieces, ground to powder fineness under throttled air suction, mixed with other cement starting material powder components and, after optional intermediate storage, processed in the rotary kiln to form cement clinker.

In the known methods of producing cement based on the MK-process, silica, alumina and iron oxide are added to the process. These additional components are required in addition to the calcium oxide produced during the process so that the mixture that is further processed at high temperatures has an overall composition that is suitable for the production of Portland clinker.

The methods described above require the use of a reducing agent to produce calcium oxide from a source of calcium sulfate by desulfurizing the latter. Since a carbon source is usually used as a reducing agent, this desulfurization process creates carbon dioxide emissions, which adds complexity to the process and also increases costs, since measures have to be undertaken for sequestering carbon dioxide. Above all, carbon dioxide increases the carbon footprint of the cement clinker production.

Therefore, the instant invention aims at improving a method of producing cement clinker by overcoming the problems mentioned above and decreasing the carbon footprint.

In order to solve this and other objects, the invention provides a method of producing cement clinker from a source of calcium sulfate, comprising:
- blending a source of calcium sulfate with silica, alumina, and iron oxide containing materials in order to obtain a raw material mixture, the calcium sulfate comprising chemically bound water,
- a first step of heating the raw material mixture in the absence of a reducing agent in a first reactor so as to desulfurize the calcium sulfate to obtain
   a) a pre-calcined material comprising calcium oxide,
   b) steam, and
   c) sulfur dioxide
- a second step of calcining the pre-calcined material in a second rector to obtain cement clinker.

Thus, the invention is based on the idea to desulfurize the source of calcium sulfate without using a reducing agent, such as a carbon source. In this way, the process does not produce any carbon dioxide, thus contributing to a reduction of greenhouse gas emissions.

It has been found that desulfurizing can be carried out by thermally decomposing the source of calcium sulfate by applying a heat treatment at a temperature of > 2'000°C, preferably > 3'000°C to the source of calcium sulfate.

According to a particularly preferred embodiment, the heat treatment is applied by means of a plasma burner. Preferably, the plasma burner may operate continuously at a temperature of 2'000-5'000°C. It has been found that such high temperatures alone are sufficient to produce calcium oxide and sulfur dioxide from a source of calcium sulfate, wherein a preferred embodiment provides that the raw material mixture feed passes the flame of the plasma burner directly.

Using a plasma burner has the additional advantage of suppressing the need of a fuel to be burnt, and reduces the amount of carbon dioxide emitted directly during the process.

The application of the high temperatures caused by a plasma burner lead to a thermal decomposition of CaSO₄ according to the following formula:

CaSO₄ -> CaO + SO₂ + 1/2 O₂

According to a preferred embodiment, the plasma burner is operated with carbon dioxide as a carrier gas. This has the advantage of a low O₂ pressure in the kiln atmosphere. Building of NOx can be avoided and the reformation of SO₂ (back reaction to CaSO₄) is suppressed.

When using carbon dioxide as a carrier gas, the off-gas from the first reactor will contain carbon dioxide in addition to sulfur dioxide. The carbon dioxide fraction of the off-gas may advantageously be recycled to the plasma burner and reused as a carrier gas. In this way, the desulfurization process is free of carbon dioxide emissions.

Preferably, the first step of heating the raw material mixture in the first reactor is carried out in an atmosphere consisting mainly of CO₂ and SO₂ and a small percentage of oxygen. To avoid the reformation of SO₃ and later CaSO₄ the oxygen content should be as low as possible. Preferably, the oxygen content in the atmosphere of the first reactor is kept < 10 vol.%, preferably < 5 vol.%, in particular < 3 vol.-%.

Another aspect of the method according to the invention is that the desulfurization step and the calcination of the calcium oxide resulting from the desulfurization step are carried out in separate reactors. In this way, each step may be optimized with respect to its process conditions, including atmosphere and temperature. For example, the first reactor may be operated at a considerably higher temperature than would be required for the calcination process carried out in the second reactor. Further, the first step may be improved with regard to the proper separation of sulfur dioxide from the pre-calcined material comprising the calcium oxide. In this way, less or no sulfate will be entrained into the second step and the resulting cement clinker will have a reduced saturation with sulfate. Further, the entrainment of any unreacted calcium sulfate into the second step may be reduced or eliminated, resulting in a cement having a lower content of calcium sulfate.

Since an optimal temperature may be adjusted for each of the first and second steps, the energy efficiency of the overall process is increased.

As the method according to the invention is carried out in two calcination steps, the calcium oxide resulting from the first step may hydrate, for example due to water vapor in the air, to partially form calcium hydroxide.

Further, with the two-step process the generation of the intermediate product can be controlled very well, e.g. by controlling the sulfur content, the CaSO₄ retention time and the temperature, therefore a higher quality clinker may be achieved in the second step.

Also, the two steps of the process can be carried out at different geographical locations, considering the availability and/or the market for gypsum, sulfuric acid and the final clinker product.

According to the invention, the additional materials needed for the production of Portland clinker, namely silica, alumina and iron oxide, are already present in the initial raw material mixture so that they are subjected to the heat treatment of the first step together with the source of calcium sulfate. Silica, alumina and iron oxide are required to be present in the pre-calcined material that is subjected to the calcination step, because they react with calcium oxide and form clinker minerals, in particular alite (Ca3SiO5), belite (Ca2SiO4), tricalcium aluminate (Ca3Al2O6), and tetracalcium aluminoferrite (Ca4Al2Fe2O10). The presence of silica, alumina, and iron oxide at the elevated temperatures existing during the desulfurization step might lead to some initial pre-conditioning of such mineral phases, which could potentially make the later calcination step more efficient or predictable.

The step of blending the source of calcium sulfate with the silica, alumina, and iron oxide containing materials may be carried out in a separate mixing device before the resulting raw material mixture is introduced into the first reactor. Alternatively, the blending step may be carried out in the first reactor, prior to or during the heating step.

Further, according to the invention, the calcium sulfate comprises chemically bound water, so that in the first step water is released in the form of steam, which may be collected from the off-gas of the first reactor for further utilization. The calcium sulfate comprising chemically bound water used in the present invention may be gypsum (CaSO₄,2 H₂O), hemihydrate (CaSO₄,1/2 H₂O), phosphogypsum, or mixtures thereof.

Preferably, the steam withdrawn from the first step is used to produce sulfuric acid from the sulfur dioxide. The process of producing sulfuric acid from sulfur dioxide may be carried out as follows: First, sulfur dioxide is converted into sulfur trioxide using a vanadium(V) oxide catalyst. The sulfur trioxide cannot be directly mixed with water to produce sulfuric acid, because the direct reaction of sulfur trioxide with water is highly exothermic and can lead to the formation of a sulfuric acid fog, which is hazardous. Instead, sulfur trioxide is first reacted with sulfuric acid to produce oleum (H₂S₂O₇), also known as fuming sulfuric acid. Then, this oleum is carefully diluted with water (obtained by condensing the steam) to form concentrated sulfuric acid. Therefore, the steam extracted from the first step of the method of the invention is used in the final dilution stage to produce sulfuric acid from oleum.

In a preferred embodiment, the silica, alumina, and iron oxide containing materials comprise recycled or waste materials. In a preferred embodiment, the silica, alumina, and iron oxide containing materials comprise at least 40 wt.-% of recycled or waste materials.

The recycled or waste materials can be selected from any of the following materials: mineral waste materials from construction and demolition such as concrete demolition waste, recycled aggregates, recycled bricks, coal ashes, or steel slags.

The use of waste and recycled materials decreases the environmental impact of this production process, by minimizing the need to use virgin materials.

As to the control of the temperature in the two steps of the method of the invention, a preferred embodiment provides that the calcination of the first step is carried out at a temperature of > 2'000°C, preferably > 3'000°C, and the calcination of the second step is carried out at a temperature of 1'340-1'450°C.

Various sources of calcium sulfate may be used as a starting material of the method of the invention. In particular, the source of calcium sulfate may be gypsum, hemihydrate, waste calcium sulfate and/or phosphogypsum, the latter being widely available as it is most often landfilled in large quantities, being a by-product of the production of phosphate-based fertilizers or phosphoric acid. Preferably, the source of calcium sulfate is free of carbon.

In order to maximize the surface to volume ratio of the calcium sulfate source, thereby enhancing the energy transfer from the plasma burner to the material, the source of calcium sulfate is preferably introduced into the first reactor in the form of a powder, preferably having a maximum particle size of 300 µm. Herein, the particle size is measured by sieving.

Considering that some sources of calcium sulfate have a high content of free water, a preferred embodiment of the invention provides that the source of calcium sulfate is dried (dehydrated) to a water content of < 2 wt.-%, preferably less < 1 wt.-%, before being introduced into the first reactor.

Preferably, a heat exchanger is used in order to withdraw heat from the calcined material, the steam, the sulfur dioxide and/or the cement clinker, wherein the heat is preferably used to dry the source of calcium sulfate or the raw material mixture.

The sulfur dioxide contained in the off-gas of the first reactor is separated from other constituents, for example by a scrubber, to form sulfuric acid, which is a by-product of the present process that can be made further use of in other industrial applications.

The second reactor may preferably be designed as a rotary kiln. In particular, an existing rotary kiln of a cement manufacturing plant may be used.

The second reactor may be heated by burning various types of fuels. However, in order to reduce the carbon footprint of the process, a preferred embodiment provides that the step of calcining the raw material mixture in the second reactor is carried out by using at least one plasma burner. The at least one plasma burner can optionally be used in combination with other burners, such as a dihydrogen burner.

In order to prevent sulfur compounds obtained in the first step of the method of the invention from being entrained into the second step, the sulfur dioxide is separated from the pre-calcined material comprising calcium oxide, before the pre-calcined material is fed to the second step.

As mentioned before, an advantage of the present invention is the greater flexibility as to the use of the pre-calcined material comprising calcium oxide obtained from the first step, since it is provided as a separate intermediate product. According to a first alternative, the pre-calcined material comprising calcium oxide coming from the first step is allowed to cool to ambient temperature, hydrate to partially form calcium hydroxide, and is stored before being used in the second step.

According to a second alternative, the pre-calcined material comprising calcium oxide is withdrawn from the first reactor at a first temperature and is introduced into the second reactor at a second temperature that is not lower than 1350°C. In particular, both reactors may operate in cascade to make sure that the materials entering the second reactor retain heat and avoid hydration of the calcium oxide so as to reduce the energy consumption of the second reactor.

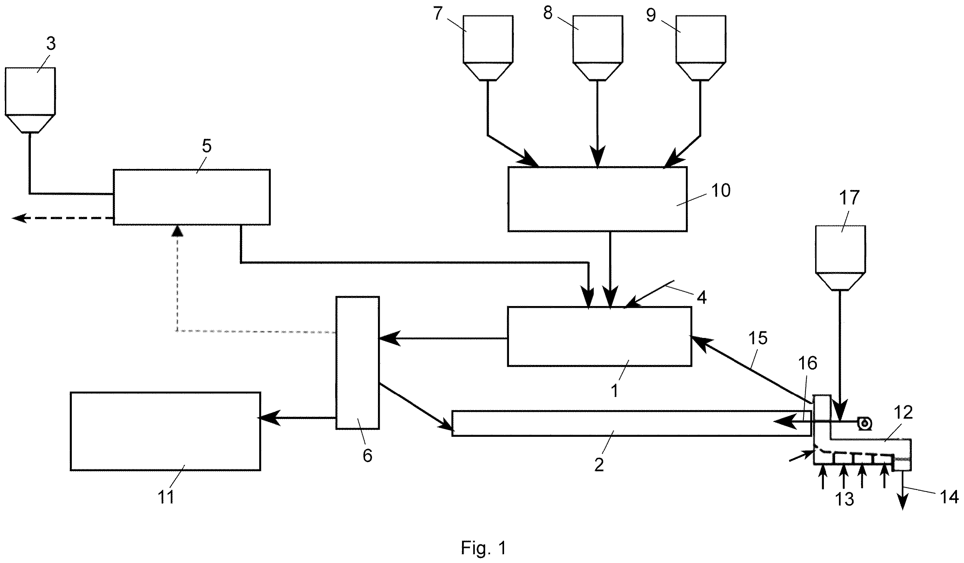

The invention will now be described by means of an exemplary embodiment illustrated in Fig. 1. The figure shows a first reactor 1 and a second reactor 2. The first reactor 1 is designed to desulfurize a source of calcium sulfate 3 by means of a plasma burner 4. The source of calcium sulfate 3 is first dehydrated in a dryer 5. The dehydrated calcium sulfate is introduced into the first reactor 1. A silica containing corrective material 7, an alumina containing corrective material 8 and iron oxide containing corrective material 9 are mixed in a mixer 10 and the mixture is also added into the first reactor 1. In the first rector 1, the raw material mixture is heated by means of the plasma burner 4, in particular by passing a stream of pulverulent raw material through the flame of the plasma burner 4. Carbon dioxide may be used as a carrier gas for the plasma burner 4. The resulting pre-calcined material comprising calcium oxide, sulfur dioxide, steam and carbon dioxide (the carrier gas) are withdrawn from the first reactor 1 and introduced into a heat exchanger 6.

The gaseous substances contained in the heat exchanger 6 are removed from the heat exchanger 6 separately from the solid substances. In doing so, gaseous sulfur dioxide and carbon dioxide are introduced into the gas conditioning and scrubbing unit 11, where the gases may be separated from each other. The carbon dioxide may be recycled to be used as a carrier gas for plasma burner 4. The steam from the first reactor is subjected to condensation and the resulting water may be used in the production of sulfuric acid from sulfur dioxide.

The pre-calcined material comprising calcium oxide and the corrective materials is introduced into the second reactor 2, which is designed as a rotary kiln, and is calcined in order to obtain cement clinker. The cement clinker leaving the second reactor 2 is cooled in a clinker cooler 12 in heat exchange with cooling air 13. The cooled clinker is extracted from the clinker cooler 12 at 14. The sensible heat of the cooling air leaving the clinker cooler 12 via line 15 may be used in the first reactor 1.

The second reactor is operated by a burner 16, in which fossil and/or alternative fuels 17 may be burned. Alternatively, the second reactor 2 can also be heated by means of a plasma burner.

## Claims

1. A method of producing cement clinker from a source of calcium sulfate, comprising:
- blending a source of calcium sulfate with silica, alumina, and iron oxide containing materials in order to obtain a raw material mixture, the calcium sulfate comprising chemically bound water,
- a first step of heating the raw material mixture in the absence of a reducing agent in a first reactor so as to desulfurize the calcium sulfate to obtain
a) a pre-calcined material comprising calcium oxide,
b) steam, and
c) sulfur dioxide
- a second step of calcining the pre-calcined material in a second rector to obtain cement clinker.

2. Method according to claim 1, wherein the first step is carried out to produce calcium oxide which has a sulfur content of less than 0.1% by weight.

3. Method according to claim 1 or 2, wherein said desulfurizing is carried out by thermally decomposing the source of calcium sulfate by applying a heat treatment at a temperature of > 2'000°C, preferably > 3'000°C to the source of calcium sulfate.

4. Method according to claim 3, wherein the heat treatment is applied by means of a plasma burner, in which the raw material mixture is preferably led through a plasma flame emitted by the plasma burner.

5. Method according to claim 5, wherein the plasma burner is operated with CO₂ as a carrier gas.

6. Method according to any one of claims 1 to 5, wherein CO₂ contained in an off-gas from the first reactor, said off-gas comprising sulfur dioxide and CO₂, is recycled to the plasma burner as a carrier gas.

7. Method according to any one of claims 1 to 6, wherein the calcination of the second step is carried out at a temperature of 1'340-1'450°C.

8. Method according to any one of claims 1 to 7, wherein the source of calcium sulfate is gypsum, hemihydrate, waste calcium sulfate and/or phosphogypsum.

9. Method according to any one of claims 1 to 8, wherein the source of calcium sulfate is provided in the form of a powder, preferably having a maximum particle size of 300pm measured by sieving.

10. Method according to any one of claims 1 to 9, wherein the source of calcium sulfate is dried to a water content of < 2 wt.-% before being introduced into the first reactor.

11. Method according to any one of claims 1 to 10, wherein the second reactor is designed as a rotary kiln.

12. Method according to any one of claims 1 to 11, wherein the step of calcining the pre-calcined material in the second reactor is carried out by using at least one plasma burner.

13. Method according to any one of claims 1 to 12, wherein the sulfur dioxide obtained in the first step is separated from the pre-calcined material, before the pre-calcined material is fed to the second step.

14. Method according to any one of claims 1 to 13, wherein the pre-calcined material coming from the first step is allowed to cool to ambient temperature and is stored before being used in the second step.

15. Method according to any one of claims 1 to 13, wherein the pre-calcined material is withdrawn from the first reactor at a first temperature and is introduced into the second rector at a second temperature that is not lower than 1350°C.

16. Method according to any one of claims 1 to 15, wherein the silica, alumina and iron oxide containing materials comprise recycled or waste materials.

17. Method according to claim 16, wherein the recycled or waste materials are selected from any of the following materials: mineral waste materials from construction and demolition such as concrete demolition waste, recycled aggregates, recycled bricks, coal ashes, or steel slags.

18. Method according to any one of claims 1 to 17, wherein the steam withdrawn from the first step is used to produce sulfuric acid from the sulfur dioxide.

19. Method according to any one of claims 1 to 18, wherein a heat exchanger is used in order to withdraw heat from the calcined material, the steam, the sulfur dioxide and/or the cement clinker, wherein the heat is preferably used to dry the source of calcium sulfate or the raw material mixture.
